# EUROPÄISCHE PATENTSCHRIFT

(11) **EP 1 244 535 B1**
(45) Veröffentlichungstag und Bekanntmachung des Hinweises auf die Patenterteilung: **23.07.2003**
(21) Anmeldenummer: 00901076.0
(22) Anmeldetag: 07.01.2000
(51) Int. Cl.: B23Q 11/00, B23Q 1/01

(54) **FRÄSMASCHINE MIT ROTIEREND ANTREIBBARER WERKZEUGSPINDEL**
MILLING MACHINE COMPRISING A ROTATING, DRIVABLE TOOL SPINDLE
FRAISEUSE A BROCHE PORTE-OUTIL ENTRAINEE EN ROTATION

(43) Veröffentlichungstag der Anmeldung: 02.10.2002
(73) Patentinhaber: Deckel Maho Seebach GmbH, 99846 Seebach (DE)
(72) Erfinder: LASCH, Thorsten, D-99880 Aspach (DE); SPIEGELBERG, Frank, D-06449 Aschersleben (DE)
(74) Vertreter: Thielking, Bodo, Dipl.-Ing.
(86) Internationale Anmeldenummer: EP0000092
(87) Internationale Veröffentlichungsnummer: WO01051247

(56) Entgegenhaltungen:
- EP-A- 0 239 564
- EP-A- 0 894 564
- WO-A-94/19147
- DE-A- 2 521 036
- DE-A- 4 102 734
- DE-A- 4 317 102
- DE-A- 19 830 391
- US-A- 5 294 220

## Beschreibung

### TECHNISCHES GEBIET

Die Erfindung betrifft eine Fräsmaschine nach dem Oberbegriff des Patentanspruchs 1.

### STAND DER TECHNIK

Bei einer bekannten Vorrichtung dieser Art (DE 25 21 036 B2) ist die Werkzeugspindel in einer Kragarmanordnung am bedienerseitigen Ende eines Y-Schlittens verfahrbar, der seinerseits in einem X-Schlitten verschieblich ist. Die Führungen des X-Schlittens befinden sich am rückwärtigen Ende des Maschinentisches in einem Bereich, der hinter einem in Querrichtung sich erstreckenden Späneraum liegt.

Der Späneanfall bei Fräsmaschinen kann vergleichsweise groß sein. Eine Vergrößerung des Späneraums bei der bekannten Vorrichtung führt dazu, daß die sich aus der Kragarmanordnung ergebenden Instabilitäten der bekannten Maschine sogar noch verstärkt werden, weil die X-Achsenführungen auf dem Maschinentisch noch weiter nach hinten wandern muß und damit die Kragarmlänge vergrößert wird.

Es sind auch bereits Fräsmaschinen in Portalbauweise bekannt, bei denen die Werkzeugspindelachse entweder horizontal oder vertikal verläuft. Bei derartigen bekannten Maschinen wird die Stabilität der Maschine im wesentlichen bestimmt durch seitlich vorgesehene Verbindungswangen zwischen dem Maschinengestell und den oben liegenden, horizontal angeordneten Führungsbereichen.

### DIE ERFINDUNG

Ausgehend von dem eingangs erwähnten Stand der Technik liegt der Erfindung die Aufgabe zugrunde, eine Fräsmaschine zu schaffen, welche die Ausbildung vergleichsweise großer Späneabfuhrräume und Späneabführvorrichtungen in Verbindung mit einer hohen Steifigkeit der Maschine bei deren kompakter Bauweise ermöglicht.

Die Lösung dieser Aufgabe erfolgt mit den Merkmalen des Patentanspruchs 1.

Bevorzugte Ausführungsformen der Erfindung sind in den Unteransprüchen beschrieben.

### KURZBESCHREIBUNG DER ZEICHNUNGSABBILDUNG

Nachstehend wird eine bevorzugte Ausführungsform der Erfindung anhand der Zeichnungen näher beschrieben. Es zeigen:
- Figur 1 -: eine perspektivische Ansicht einer Fräsmaschine schräg von vorn mit Blick in den Arbeitsraum;
- Figur 2 -: eine perspektivische Ansicht der Fräsmaschine gemäß Fig. 1 in Blickrichtung gemäß Pfeil II in Fig. 3, mit weggebrochen dargestellten Eckbereichen des Portalrahmens;
- Figur 3 -: eine perspektivische Ansicht der Fräsmaschine gemäß Fig. 1 schräg von hinten mit weggebrochen dargestelltem vorderem Portalholm;

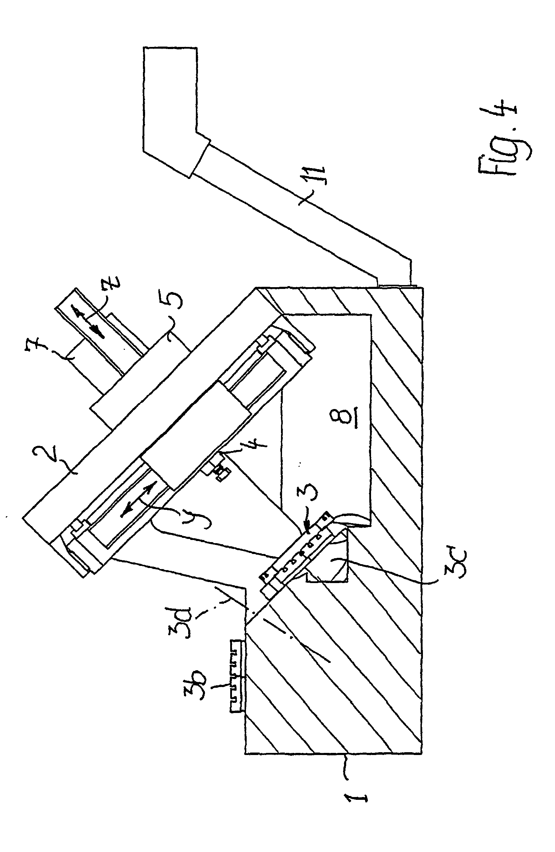

- Figur 4 -: eine Seitenansicht der Fräsmaschine gemäß Fig. 1, bei der die Seitenwange auf der Ansichtsseite weggelassen und der dahinterliegende Bereich der Maschine teilweise geschnitten dargestellt ist.

### BESTER WEG ZUR AUSFÜHRUNG DER ERFINDUNG

Ein Maschinenbett 1 trägt einen Werkstücktisch 3a mit einer zur Horizontalen geneigten Werkstückaufspannfläche 3. An dem Maschinenbett 1 stützt sich über Seitenwangen 9 und Abstützbereiche 2c ein parallel zur Werkstückaufspannfläche 3 verlaufender, geschlossener Portalrahmen 2 ab. An der der Bedienungs- und Beladeseite der Fräsmaschine gegenüberliegenden Seite ruht der Portalrahmen 2 unmittelbar auf dem Maschinenbett 1. Der Portalrahmen 2 trägt eine in drei orthogonalen Achsrichtungen verschiebliche Werkzeugspindel 4.

Für den Vorschub in Z-Richtung ist die Werkzeugspindel 4 in einem Schlitten 7 gelagert, der als Spindelkasten ausgebildet ist. Die Vorschubbewegungen in den beiden anderen, in einer zur Aufspannfläche 3 parallelen Ebene liegenden Vorschubrichtungen werden in Y-Richtung durch einen ersten Schlitten 5 und in X-Richtung durch einen zweiten Schlitten 6 erreicht. In der Werkzeugspindel 4 ist ein Fräswerkzeug 4b eingespannt.

Die Seitenwangen 9 weisen durchbrochene Bereiche 9a auf, die die Beobachtung des Fräswerkzeugs 4b und des Zerspanungsprozesses ermöglichen. Auf dem Maschinenbett 1 ist ein weiterer Werkstücktisch 3b in einer Bereitstellungsposition gelagert, dessen Aufspannfläche horizontal ausgerichtet ist, und der an die Stelle des Werkstücktisches 3a in die Bearbeitungsposition verschwenkbar ist. Durch die horizontale Anordnung der Aufspannfläche in der Bereitstellungsposition werden das Abspannen eines bearbeiteten Werkstücks und das Aufspannen eines Rohteils erleichtert.

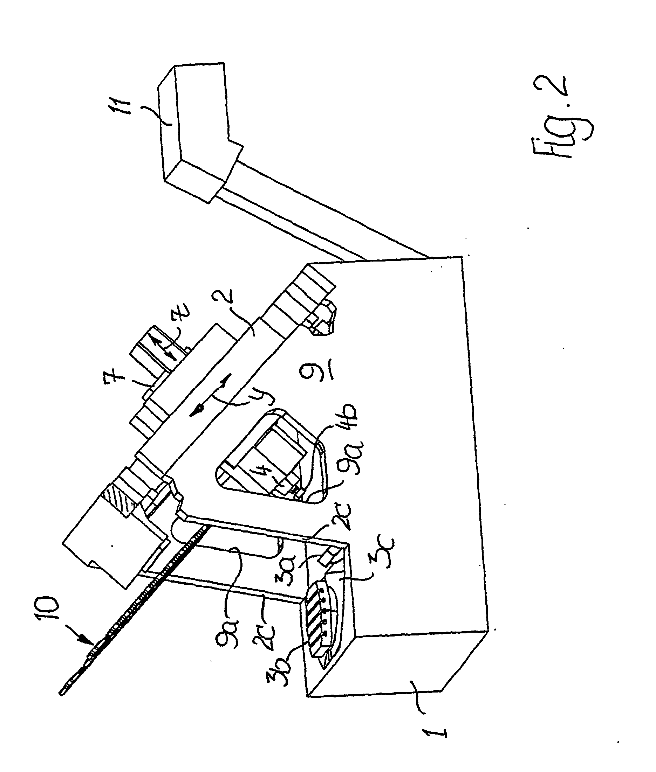

Fig. 2 zeigt eine Ausführungsform der Fräsmaschine, bei der der Wechsel der Werkstücktische 3a und 3b mittels einer Schwenkvorrichtung 3c automatisch möglich ist. Die Werkstücktische 3a und 3b werden um eine Schwenkachse 3d geschwenkt, die in Richtung der Winkelhalbierenden des von horizontaler und geneigter Werkstücktischfläche gebildeten Winkels angeordnet ist. Die Fräsmaschine ist mit einem Späneförderer 11 ausgerüstet. Die Werkzeügspindel 4 wird aus einem Werkzeugmagazin 10 mit Werkzeugen 4b versorgt, das unterhalb des Portals 2 in den Bewegungsbereich der Werkzeugspindel 4 hineinragt, so daß die Werkzeuge 4b von der Werkzeugspindel 4 unmittelbar aus dem Werkzeugmagazin 10 abgeholt werden können.

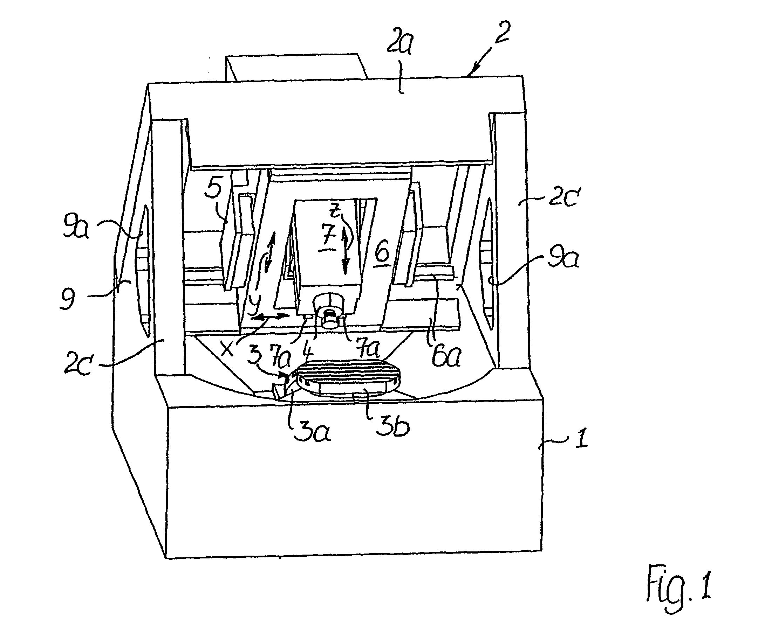

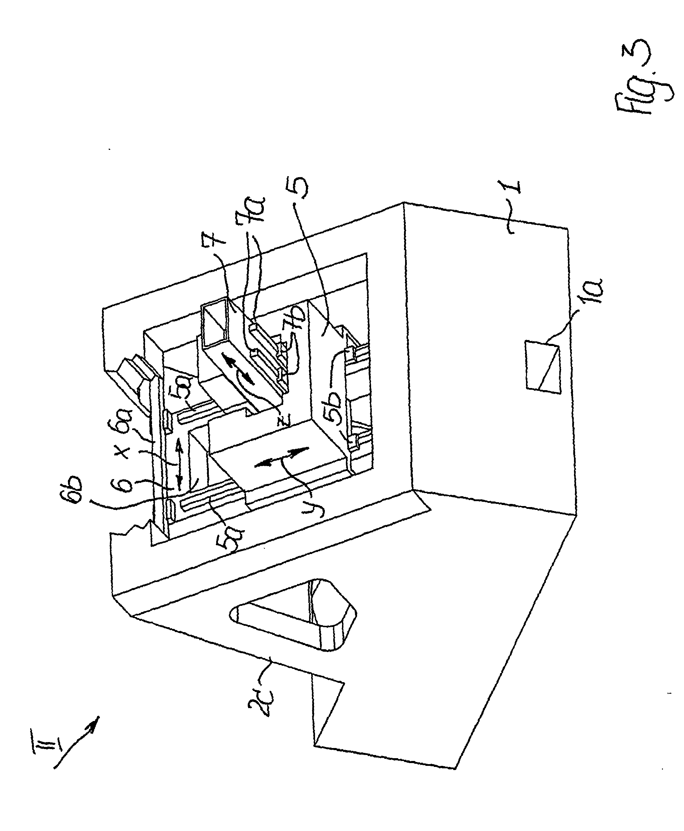

Die Führungen 6a für den in X-Richtung verfahrbaren zweiten Schlitten 6, befinden sich an dem unteren Querholm 2b (siehe Fig. 1) und an dem oberen Querholm 2a. Wie in Fig. 3 erkennbar ist, trägt der Schlitten 6 auf seiner Oberseite Führungen 5a, auf denen am ersten Schlitten 5 befestigte Gegenführungen 5b gleiten.

Der erste Schlitten 5 weist seinerseits Führungen 7b für die Gegenführungen 7a des als Spindelkasten ausgebildeten dritten Schlittens 7 auf.

Die Führungen 5a erstrecken sich beiderseits eines Ausschnitts 6b, durch den die Werkzeugspindel 4 und der Spindelkasten hindurchragen und in dem sie verschieblich sind. Die Rückwand des Maschinenbettes 1 ist mit einer Öffnung 1a versehen, durch die der in Fig. 2 dargestellte Späneförderer 11 in den Spänesammelraum 8 geführt ist.

Der Spänesammelraum 8 schließt sich unmittelbar an die Werkstückaufspannfläche 3 des Werkstücktisches 3a an, so daß die bei der Zerspanung anfallenden Späne auch ohne die Unterstützung eines Kühlmittelströms in den Spänesammelraum 8 fallen und vom Späneförderer 11 daraus entfernt werden können.

Im dargestellten und beschriebenen Ausführungsbeispiel erstreckt sich die X-Achse in der Horizontalen, während die Y-Achse in der geneigten Ebene des Portalrahmens verläuft. Es ist ohne weiteres auch möglich, als X-Achsrichtung die geneigte Richtung der Seitenholme des Portalrahmens anzunehmen und als Y-Achsrichtung die Horizontale.

Anstelle des dargestellten Werkstücktisches können auch bekannte andere Werkstücktische verwendet werden, beispielsweise solche mit zwei Schwenkachsen. Auf diese Weise ist dann eine Bearbeitung in fünf Achsen möglich.

Die Be- und Entladung der Werkstücke kann auch mittels eines Palettenwechslers erfolgen.

## Patentansprüche

1. Fräsmaschine mit einer rotierend antreibbaren und senkrecht zu einer von der Frontseite eines Maschinenbetts (1) zu dessen Rückseite abfallend geneigten Werkstückaufspannfläche (3) in Z-Achsrichtung verfahrbaren Werkzeugspindel (4), die mittels eines ersten Schlittens (5) in Y-Richtung und mittels eines zweiten Schlittens (6) in X-Richtung auf maschinenbettfesten Führungen (6a) verfahrbar ist, wobei hinter der Werkstückaufspannfläche (3) ein Spänesammelraum (8) vorgesehen ist,
**dadurch gekennzeichnet,**
**daß** die Führungen (6a) für den zweiten Schlitten (6) an einander gegenüberliegenden Holmen (2a; 2b) eines parallel zur Werkstückaufspannfläche (3) angeordneten, geschlossenen Portalrahmens (2) vorgesehen sind, der auf seiner Frontseite mittels seitlicher vorderer Abstützbereiche (2c) und auf seiner Rückseite unmittelbar mit dem Maschinenbett (1) verbunden ist.

2. Fräsmaschine nach Anspruch 1,
**dadurch gekennzeichnet,**
**daß** die Führungen (6a) für den zweiten Schlitten (6) am vorderen und am hinteren Holm (2a; 2b) des Portalrahmens (2) vorgesehen sind.

3. Fräsmaschine nach Anspruch 1 oder 2,
**dadurch gekennzeichnet,**
**daß** die in Y-Richtung sich erstreckenden Führungen (5a, 5b) des ersten Schlittens (5) mit einem den zweiten Schlitten (6) bildenden Rahmen zusammenwirken.

4. Fräsmaschine nach einem der Ansprüche 1 bis 3,
**dadurch gekennzeichnet,**
**daß** die in Z-Achsrichtung sich erstreckenden Führungen (7a) der Werkzeugspindel (4) auf einem dritten Schlitten (7) vorgesehen sind, die mit auf dem ersten Schlitten (5) vorgesehenen Gegenführungen (7b) zusammenwirken.

5. Fräsmaschine nach einem der Ansprüche 1 bis 4,
**dadurch gekennzeichnet,**
**daß** der Portalrahmen (2) mittels seitlicher, am Maschinenbett (1) fester Seitenwangen (9) abgestützt ist.

6. Fräsmaschine nach einem der Ansprüche 1 bis 5,
**dadurch gekennzeichnet,**
**daß** die Seitenwangen (9) einen durchbrochenen Bereich (9a) aufweisen.

7. Fräsmaschine nach einem der Ansprüche 1 bis 6,
**dadurch gekennzeichnet,**
**daß** die geneigt gegenüber der Horizontalen angeordnete Werkstückaufspannfläche (3) um eine quer zur Aufspannfläche (3) verlaufende, von der Z-Achsrichtung abweichend geneigte Schwenkachse (3d) aus einer Bereitstellungsposition in eine Bearbeitungsposition verschwenkbar ist.

## Claims

1. Milling machine with a rotary driven tool spindle (4) which is movable in the Z-axial direction perpendicular to a workpiece clamping surface (3) which is inclined dropping down from the front of a machine bed (1) to the back and which is movable on guides (6a) fixed on the machine bed in the Y-direction by means of a first slide carriage (5) and in the X-direction by means of a second slide carriage (6), whereby behind the tool clamping surface (3) there is a chip collection chamber (8),
**characterised in that**
the guides (6a) for the second slide carriage (6) are provided on opposite beams (2a, 2b) of a closed portal frame (2) which is mounted parallel to the workpiece clamping surface (3), and which is connected to the machine bed (1) by lateral front support areas (2c) at the front side and directly at the back.

2. Milling machine according to claim 1,
**characterised in that**
the guides (6a) for the second slide carriage (6) are provided on the front and rear beam (2a, 2b) of the portal frame (2).

3. Milling machine according to claim 1 or 2,
**characterised in that**
the guides (5a, 5b) of the first slide carriage (5) extending in the Y direction interact with a frame forming the second slide carriage (6).

4. Milling machine according to one of claims 1 to 3,
**characterised in that**
the guides (7a) of the tool spindle (4) extending in the Z axial direction are provided on a third slide carriage (7) which interact with counter guides (7b) provided on the first slide carriage (5).

5. Milling machine according to one of claims 1 to 4,
**characterised in that**
the portal frame (2) is supported by means of side walls (9) fixed on the machine bed (1).

6. Milling machine according to one of claims 1 to 5,
**characterised in that**
the side walls (9) have an area (a) which is broken through.

7. Milling machine according to one of claims 1 to 6,
**characterised in that**
the workpiece clamping surface (3) mounted inclined to the horizontal is able to swivel from a stand-by position into a machining position about a swivel axis (3d) which runs across the clamping surface (3) and is inclined away from the Z-axial direction.

## Revendications

1. Fraiseuse avec une broche porte-outil (4) entraînée en rotation et déplaçable dans le sens axial Z vers un plateau de serrage de pièce (3), incliné en pente descendante, du côté frontal au côté arrière, d'un socle de machine (1), laquelle broche porte-outil (4) peut être déplacée, dans le sens Y, à l'aide d'un premier chariot (5) et, dans le sens X, à l'aide d'un deuxième chariot (6), sur des guides (6a) fixés sur le socle de machine, un collecteur de copeaux (8) étant prévu en aval du plateau de serrage de pièce (3),
**caractérisé en ce que**
les guides (6a) pour le deuxième chariot (6) sont disposés sur des traverses (2a; 2b), situées vis-à-vis l'une de l'autre, d'un portique fermé (2) qui est disposé parallèlement au plateau de serrage de pièce (3) et est relié, sur le côté frontal, à l'aide de zones d'appui (2c) antérieures, latérales, au socle de machine (1) et, à l'arrière, directement à celui-ci.

2. Fraiseuse selon la revendication 1,
**caractérisée en ce que**
les guides (6a) pour le deuxième chariot (6) sont disposés sur la traverse antérieure et à la traverse postérieure (2a; 2b) du portique (2).

3. Fraiseuse selon la revendication 1 ou 2,
**caractérisée en ce que**
les guides (5a, 5b) du premier chariot (5), orientés dans la direction Y, coopèrent avec un cadre qui forme le deuxième chariot (6)

4. Fraiseuse selon l'une des revendications 1 à 3, **caractérisée en ce que**
les guides (7a) de la broche porte-outil (4), orientés dans le sens axial Z, sont prévus sur un troisième chariot (7), lesquels guides (7a) coopèrent avec des contre-guides (7b) prévus sur le premier chariot (5).

5. Fraiseuse selon l'une des revendications 1 à 4, **caractérisée en ce que**
le portique (2) est soutenu par des joues latérales (9) fixées latéralement au lit de la machine (1).

6. Fraiseuse selon l'une des revendications 1 à 5, **caractérisée en ce que**
les joues latérales (9) présentent une zone ajourée (9a).

7. Fraiseuse selon l'une des revendications 1 à 6, **caractérisée en ce que**
le plateau de serrage de pièce (3), incliné par rapport à l'horizontale, peut être pivotée, d'une position en attente dans une position de travail, autour d'un pivot (3d) qui est orienté transversalement par rapport au plateau de serrage de pièce (3) et diverge obliquement du sens axial Z.
